# EUROPÄISCHE PATENTSCHRIFT

(11) **EP 0 483 751 B1**
(45) Veröffentlichungstag und Bekanntmachung des Hinweises auf die Patenterteilung: **30.03.1994**
(21) Anmeldenummer: 91118406.7
(22) Anmeldetag: 29.10.1991
(51) Int. Cl.: F16L 19/04, F16L 19/02

(54) **Verbindungssystem**
Connection system
Système d'assemblage

(30) Priorität: 02.11.1990 DE 4034803
(43) Veröffentlichungstag der Anmeldung: 06.05.1992
(73) Patentinhaber: Parker Hannifin GmbH, Geschäftsbereich ERMETO, 33659 Bielefeld (DE)
(72) Erfinder: Behrens, Günter, W-4815 Schloss-Holte (DE)
(74) Vertreter: Linser, Heinz

(56) Entgegenhaltungen:
- FR-A- 2 352 237
- GB-A- 2 018 926

## Beschreibung

Die Erfindung betrifft ein Verbindungssystem für höchstdruckfeste Rohrverschraubungen mit einem genormten, einen 24° Anschluß aufweisenden Aufnahmekörper, einer überwurfmutter zur Herstellung einer druckfesten Verbindung und einem geformten Rohr oder einem Anschlußzapfen zum Verbinden anderer Systemkomponenten.

Bei den üblichen Rohrverschraubungen befindet sich das Rohr im montierten Zustand im Bereich der Bohrung des Anschlußstückes bzw. des Innenkegels desselben und ist mit Hilfe eines Schneid- oder Klemmringes und einer Überwurfmutter an das Anschlußstück angeschlossen.

Sowohl bei der Montage als auch Demontage des Verbindungssystems muß das Rohr nach Lösen der Überwurfmutter in Achsrichtung bewegt werden, bis es radial vom Anschlußstück entfernt werden kann. In den Fällen, in denen dieser zur Montage und Demontage notwendige Platz in Achsrichtung des Rohres nicht zur Verfügung steht, können daher die üblichen Rohrverschraubungen nicht eingesetzt werden.

Aus der DE-U-1 979 979 ist eine Rohrverschraubung bekannt, bei der ein Rohr über eine Stoßverbindung mit Hilfe einer Überwurfmutter und eines Klemmringes an ein mit einer Bohrung versehenes Anschlußstück angeschlossen ist, wobei die Bohrung einen Innenkegel, eine zylindrische Fläche und eine rechtwinklig zur Achse der Bohrung verlaufende Ringfläche aufweist. In der Bohrung des Anschlußstückes ist hierbei ein Füllring angeordnet, welcher an der Wandung der Bohrung festklemmbar ist und welcher eine radiale Anschlagfläche aufweist, die im montierten Zustand der Rohrverschraubung an der ringförmigen Anschlagfläche eines sich anschließenden Klemmringes anliegt.

Eine solche Rohrverschraubung weist einige Merkmale auf, die sie für besondere Zwecke nicht geeignet macht. So weist das System mehrere Verformungsstellen auf, die es dem Monteur schwierig erscheinen lassen, den Montageabschluß durch einen steilen Kraftanstieg eindeutig zu erkennen. Der Füllring ist an seiner Frontseite mit einer ringförmigen Kante und an seiner äußeren Umfangsseite mit einem rigförmigen Absatz versehen. Beide Elemente dienen der Verklemmung, so daß bei der Montage eine Verformung derselben durchgeführt werden muß. Der sich anschließende Klemmring und der Rohrbereich, auf den der Klemmring einwirkt, unterliegen ebenfalls Verformungen. Durch die hierfür aufzubringenden Kräfte, welche den Montagekraftverlauf des Füllringes überlagern, ist für den Monteur der jeweilige Montagezustand nicht oder nur sehr schlecht erkennbar. Darüberhinaus ergeben sich durch die Verformungen keine eindeutig definierten Dichtflächen, welche höchsten Drücken auch nach einer erneuten Montage standhalten.

Schließlich bedingt das bekannte System ringförmige Rillen und Erhebungen in der inneren Oberfläche des Strömungskanals, wodurch sich Strömungswiderstände ausbilden, welche zu Verwirbelungen des Fluids führen, welche in besonderen Anwendungsfällen nicht akzeptierbar sind.

Die FR-A-2352237 zeigt ein Verbindungssystem für Bördelrohranschlüsse mit einem Adapterring. Dieser weist eine zylindrische Innenbohrung mit einer radial verlaufenden Endfläche auf. Die dem Bördelflansch zugekehrte Seite ist dem konischen Verlauf des Rohrflansches angepaßt. Ein solches Verbindungssystem läßt sich nicht radial oder nahezu radial montieren und demontieren und es ist auch keine hohe Montagesicherheit durch Ausbildung eines absoluten Montagefixpunktes gegeben.

Der Erfindung liegt die Aufgabe zugrunde ein höchstdruckfestes Verbindungssystem anzugeben, welches radial oder nahezu radial und axial montier- und demontierbar ist, keiner oder nur einer sehr geringen Einengung der lichten Weite gegenüber der Rohwerschraubung unterworfen ist, eine hohe Montagesicherheit durch Ausbildung eines absoluten Montagefixpunktes gewährleistet und eine hohe Flächenpressung an radialen Dichtflächen durch direkte Kraftübertragung sicherstellt.

Die Lösung dieser Aufgabe erfolgt nach der Erfindung dadurch, daß ein Adapterring mit zylindrischer Innenbohrung und radial verlaufenden End-Ringflächen unterschiedlicher Größe vorgeschlagen wird, von denen mindestens eine als Dichtfläche mit Dichtring ausgebildet ist, denen sich jeweils axial gerichtete Zylinderaußenflächen anschließen, zwischen denen sich ein 24° Außenkegel zur Anpassung an den Aufnahmekörper befindet.

Ein solches Verbindungssystem gestattet eine radiale Montage und Demontage, so daß das System auf engstem Raum ohne zusätzlichen Platzbedarf angeordnet werden kann.

In einer Abwandlung der Erfindung wird ein Adapterring mit zylindrischer Innenbohrung und einer radial verlaufenden End-Ringfläche sowie einer konvex oder konkav gewölbten sphärischen End-Ringfläche vorgeschlagen, von denen mindestens eine als Dichtfläche mit Dichtring ausgebildet ist, denen sich jeweils Zylinder- oder Kegelaußenflächen mit axial gerichteten Komponenten anschließen, sowie durch einen 24° Außenkegel zur Anpassung an den genormten Aufnahmekörper.

Ein solches abgewandeltes Verbindungssystem gestattet eine Montage des Anschlußzapfens in leicht ausgelenkter Richtung, d.h. in einer Abweichung eines Raumwinkels von ca. 5 Grad zur Achse der Anschlußverschraubung und des Adapters. Hierdurch wird eine zuverlässige höchstdruckdichtende Verbindung für nicht fluchtende Rohr-leitungen zum Anschlußkörper erreicht. Außerdem können in vorteilhafter Weise genormte 24 Grad Anschlußverschraubungen eingesetzt werden, die zur Zeit nur für absolut fluchtende Achsen von Verschraubung und Rohr funktionssicher angewendet werden.

In Weiterbildung der beiden Ausführungsformen der Erfindung weist der Außenkegel des Adapterringes eine Ringnut zur Aufnahme eines Dichtringes, vorzugweise eines O-Ringes auf. Hierdurch wird die Dichtheit des sich zwischen Aufnahmekörper und Adapterring ergebenden Pfades insbesondere an der Kegelfläche dieser beiden Körper gegen höchste Druckdifferenzen gesichert.
Eine weitere entscheidende Sicherung der Dichtheit des Systems erfolgt nach der Erfindung dadurch, daß die dem Anschlußzapfen oder dem radial oder entsprechend gewölbt verlaufenden Endteil des geformten Rohres im montierten Zustand zugekehrte radial oder gewölbt ausgebildete Fläche des Adapterringes ebenfalls eine Ringnut zur Aufnahme eines Dichtringes, vorzugsweise eines O-Ringes aufweist.

Nach einer Ausführungsform der Erfindung weist das geformte Rohr ein um etwa 90° zur Rohrachse aufgebördeltes Rohrende auf, wobei dieser sich ergebende Bördelflansch im montierten Zustand mit der mit einem Dichtelement versehenen Radialfläche des Adapterringes eine Dichtfläche bildet.

Für diese Ausführungsform des Rohrsystems ist es erforderlich, im montierten Zustand zwischen der Überwurfmutter und dem geformten Rohr eine Stützhülse anzuordnen. Ihre Anschlagfläche zur Außenfläche des Bördelflansches ist hierbei vorteilhaft kleiner als die Dichtfläche zwischen der Innenfläche des Bördelflansches und dem Adapterring. Hierdurch wird sichergestellt, daß bei der Montage und Demontage, d.h. bei der Drehung der Überwurfmutter kein Drehmoment auf das geformte Rohr übertragen wird, sondern durch die Stützhülse aufgefangen wird.

Um diese Wirkung auch bei Verwendung eines Anschlußzapfens zu erreichen, ist die Anschlagfläche der Überwurfmutter mit dem Anschlußzapfen kleiner als die Dichtfläche zwischen dem Anschlußzapfen und dem Adapterring.

Die Erfindung wird anhand der Zeichnungen, in denen mehrere Ausführungsbeispiele dargestellt sind, näher erläutert:
Hierbei zeigen:
- FIGUR 1: einen axialen Teilschnitt durch das Verbindungssystem unter Verwendung eines aufgebördelten Rohres,
- FIGUR 2: einen axialen Teilschnitt durch das Verbindungssystem unter Verwendung eines Anschlußzapfens,
- FIGUR 3: einen axialen Teilschnitt durch das Verbindungssystem unter Verwendung eines Anschlußzapfens mit konkav gewölbter Stoßfläche und
- FIGUR 4: einen axialen Teilschnitt durch das Verbindungssystem unter Verwendung eines Anschlußzapfens mit konvex gewölbter Stoßfläche.

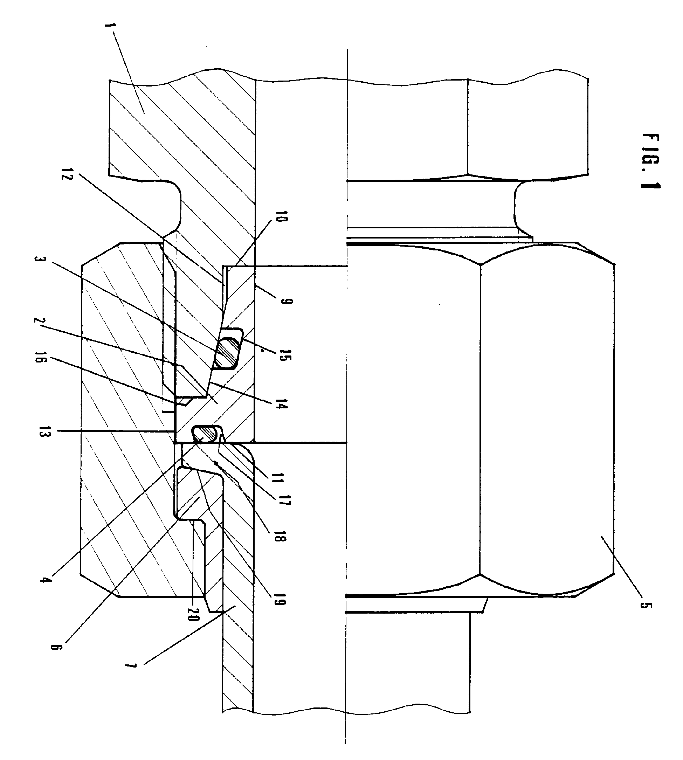

Die Figur 1 zeigt ein Verbindungssystem im axialen Teilschnitt und in Teilansicht, bestehend aus einem Aufnahmekörper 1, der einen genormten 24° Innenkegel aufweist, einer Überwurfmutter 5, welche mit ihrem Innengewinde das Außengewinde des Aufnahmekörper 1 erfaßt, einem geformten Rohr 7, welches einen Bördelflansch 18 von ca. 90° zur Rohrachse aufweist und einer Stützhülse 6, die zwischen der Überwurfmutter 5 und dem geformten Rohr 7 liegt und bei Drehung der Überwurfmutter 5 gegen den Bördelflansch gepreßt wird. Der Adapterring 2 weist die Bohrung 9 auf, die einen Teil des Strömungskanals bildet, und welche durch die radialen End- oder Ringflächen 10 und 11 begrenzt wird. Der Außenradius der beiden Ringflächen 10 und 11 ist unterschiedlich groß, wobei der Außenradius der Ringfläche 10 gleich oder geringfügig kleiner als der Außenradius der den Innenkegel des Aufnahmekörpers 1 begrenzenden Stoßringfläche ist. Der Adapterring 2 ist zur Anpassung an den Innenkegel des Aufnahmekörpers 1 mit einem 24° Außenkegel 14 ersehen, wobei in der Kegelfläche eine Ringnut 15 zur Aufnahme eines Dicht- O-Ringes 3 vorgesehen ist. Zwischen seiner Kegelfläche 14 und seiner Ringfläche 10 weist der Adapterring in Anpassung an den genormten Aufnahmekörper 1 eine Zylinderaußenfläche 12 und eine radial verlaufende Ringfläche 16 auf.

Die End- oder Ringfläche 11 des Adapterringes 2 ist ebenfalls mit einer Ringnut 17 zur Aufnahme eines Dicht- oder O-Ringes 4 versehen. Der Innenradius der Ringfläche 11 entspricht dem Innenra-dius des Aufnahmekörpers 1. Hierdurch ergibt sich eine exakte Anpassung des Adapterringes 2 an den genormten Aufnahmekörper 1, so daß ein stufenloser Übergang der Innenbohrungen des Aufnahmekörpers 1 und des Adapterringes 2 vorliegt, wodurch die Strömungs- oder Druckverhältnisse im Rohrsystem nicht beeinträchtigt werden. Der Außenradius der Ringfläche 11 ist geringfügig kleiner als der Innenradius der Überwurfmutter 5.

Bei der Montage und Demontage des Rohrsystems nach diesem ausführungsbeispiel werden die von der Überwurfmutter ausgehenden Drehmomente in vorteilhafter Weise von der Stützhülse 6 aufgefangen, da ihre Radial- und Anschlagflächen 19 und 20 sowohl hinsichtlich ihrem Größenverhältnis als auch gegebenenfalls hinsichtlich ihrer Oberflächenbeschaffenheit so ausgebildet sind, daß kein resultierendes Drehmoment auf das geformte Rohr wirkt.

Ein wesentlicher Vorteil der vorliegenden Erfindung besteht darin, daß ein genormter Verschraubungsstutzen mit Kegelsitz verwendet werden kann, wobei eine radiale und axiale Montage und Demontage durchgeführt werden kann. Gegenüber der Rohrverschraubung erfolgt keine Einengung der lichten Weite und da keine Verformungskräfte aufzubringen sind, ergibt sich eine hohe Montagesicherheit durch einen absoluten Montagefixpunkt. Am radialen Dichtsystem ist mittels direkter Kraftübertragung von der Überwurfmutter über die Stützhülse und den Bördelrohrflansch zum Adapterring eine hohe Flächenpressung erreichbar, so daß dieses Verbindungssystem für Drücke bis über 600 bar einsetzbar ist.

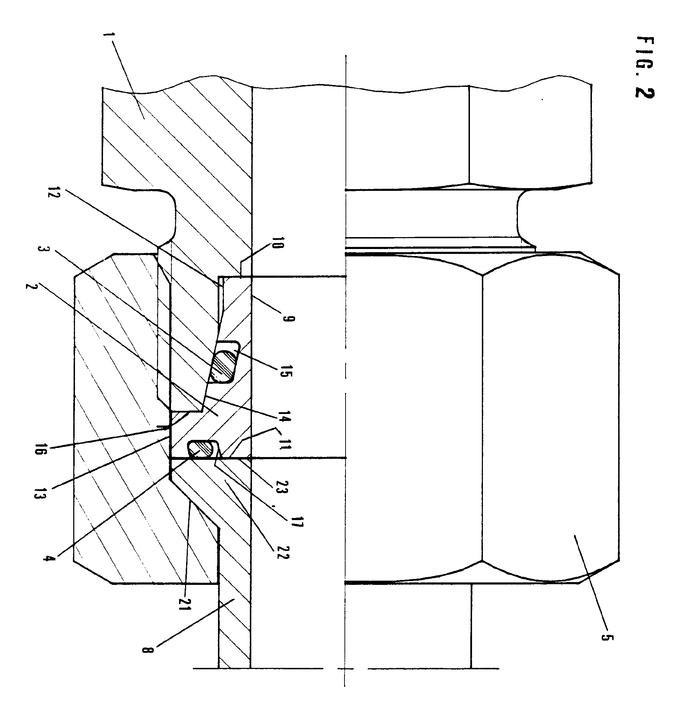

Die Figur 2 zeigt einen axialen Teilschnitt durch das Verbindungssystem unter Verwendung eines Anschlußzapfens. Das Verbindungssystem besteht in ähnlicher Weise wie das Ausführungsbeispiel nach Figur 1 aus einem Aufnahmekörper 1, der einen genormten 24° Innen-kegel aufweist, einer in diesem Fall genormten Überwurfmutter 5, welche mit ihrem Innengewinde das Außengewinde des Aufnahmekörper 1 erfaßt, einem Anschlußzapfen 8 mit einem Anschlußflansch 22 mit seiner Anlagefläche 23. Der Adapterring 2 entspricht der Ausführungsform nach Figur 1. Er weist die Bohrung 9 auf, die einen Teil des Strömungskanals bildet, und welche durch die radialen End- oder Ringflächen 10 und 11 begrenzt wird. Der Außenradius der beiden Ringflächen 10 und 11 ist unterschiedlich groß, wobei der Außenradius der Ringfläche 10 gleich oder geringfügig kleiner als der Außenradius der den Innenkegel des Aufnahmekörpers 1 begrenzenden Stoßringfläche ist. Der Adapterring 2 ist zur Anpassung an den Innenkegel des Aufnahmekörpers 1 mit dem 24° Außenkegel 14 versehen, wobei in der Kegelfläche eine Ringnut 15 zur Aufnahme eines Dicht-O-Ringes 3 vorgesehen ist. Zwischen seiner Kegelfläche 14 und seiner Ringfläche 10 weist der Adapterring in Anpassung an den genormten Aufnahmekörper 1 eine Zylinderaußenfläche 12 und eine radial verlaufende Ringfläche 16 auf.

Das Rohrversschraubungssystem nach Figur 2 weist die gleichen Vorteile auf wie das Rohrverschraubungssystem nach Figur 1. Hier entfällt lediglich die Stützhülse und anstelle eines Bördelrohres wird ein Anschlußzapfen verwendet. Auch hierbei ist am radialen Dichtsystem mittels direkter Kraftübertragung von der Überwurfmutter über den Flansch 22 des Anschlußzapfens 8 zum Adapterring 2 eine hohe Flächenpressung erreichbar, so daß auch dieses Verbindungssystem für Drücke bis über 600 bar einsetzbar ist.

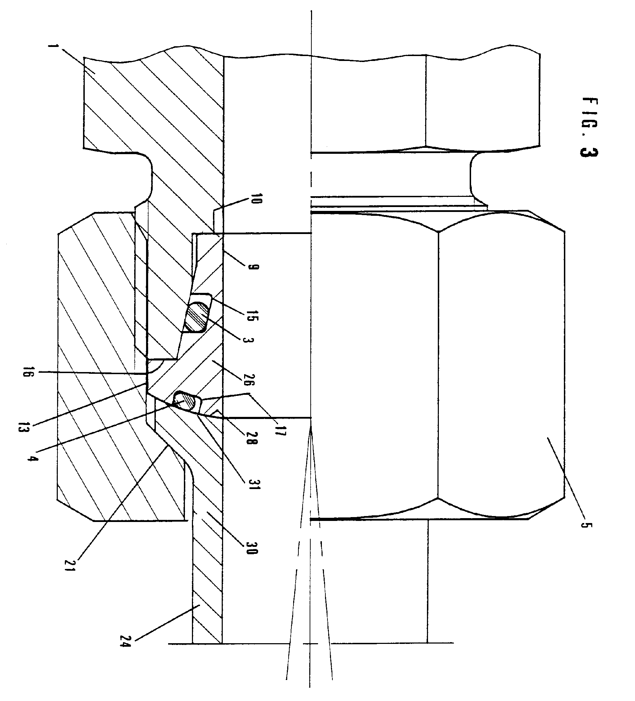

Die Figur 3 zeigt eine Abwandlung der Erfindung in Form eines axialen Teilschnittes durch das Verbindungssystem unter Verwendung eines Adapterringes mit einer konvex geformten Dichtfläche und eines Anschlußzapfens mit einer entsprechend konkav gewölbten Anlagefläche.

Das Verbindungssystem ist, von den sphärisch geformten Dichtflächen abgesehen, ähnlich aufgebaut, wie die Ausführungsform nach Figur 2. Das Verbindungssystem besteht in ähnlicher Weise aus einem Aufnahmekörper 1, der einen genormten 24° Innenkegel aufweist, einer in diesem Fall genormten Überwurfmutter 5, welche mit ihrem Innengewinde das Außengewinde des Aufnahmekörper 1 erfaßt, einem Anschlußzapfen 24 mit einem Anschlußflansch 30 und seiner konkav gewölbten Anlagefläche 31. Der Adapterring 26 entspricht der Ausführungsform nach den Figuren 1 und 2, mit Ausnahme seiner konvex geformten Dichtfläche 28. Er weist die Bohrung 9 auf, die einen Teil des Strömungskanals bildet, und welche durch die radiale Endfläche 10 und die konvexe Dichtfläche 28 begrenzt wird. Der Außenradius der beiden Flächen 10 und 28 ist unterschiedlich groß, wobei der Außenradius der Ringfläche 10 gleich oder geringfügig kleiner als der Außenradius der den Innenkegel des Aufnahmekörpers 1 begrenzenden Stoßringfläche ist.

Der Adapterring 26 ist zur Anpassung an den Innenkegel des Aufnahmekörpers 1 mit dem 24° Außenkegel 14 versehen, wobei in der Kegelfläche ebenfalls eine Ringnut 15 zur Aufnahme eines Dicht-O-Ringes 3 vorgesehen ist. Zwischen seiner Kegelfläche 14 und seiner Ringfläche 10 weist der Adapterring 26 in Anpassung an den genormten Aufnahmekörper 1 eine Zylinderaußenfläche 12 und eine radial verlaufende Ringfläche 16 auf.

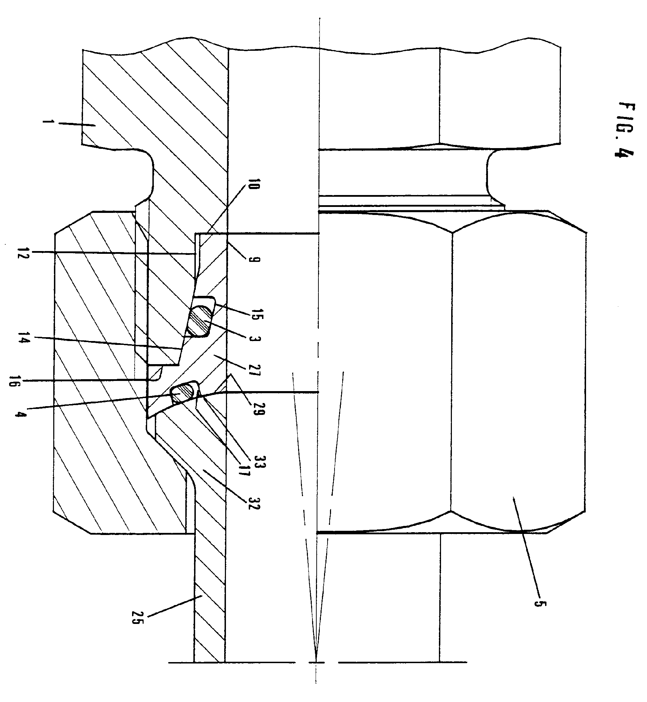

Die Figur 4 zeigt eine Variante der Ausführungsform nach Figur 3, bei der die gewölbten Dichtflächen am Adapter und Anschlußzapfen gegenseitig vertauscht sind. Alle übrigen Merkmale entsprechen der Ausführungsform nach Figur 3.

Das Verbindungssystem besteht danach in ähnlicher Weise aus einem Aufnahmekörper 1, der einen genormten 24° Innenkegel aufweist, einer auch in diesem Fall genormten Überwurfmutter 5, welche mit ihrem Innengewinde das Außengewinde des Aufnahmekörper 1 erfaßt, einem Anschlußzapfen 25 mit einem Anschlußflansch 32 und seiner konvex geformten Anlagefläche 33. Der Adapterring 27 entspricht der Ausführungsform nach den Figuren 1, 2 und 3, mit Ausnahme seiner konkav geformten Dichtfläche 29. Er weist die Bohrung 9 auf, die einen Teil des Strömungskanals bildet, und welche durch die radiale Endfläche 10 und die konkave Dichtfläche 29 begrenzt wird. Der Außenradius der beiden Flächen 10 und 29 ist unterschiedlich groß, wobei der Außenradius der Ringfläche 10 gleich oder geringfügig kleiner als der Außenradius der den Innenkegel des Aufnahmekörpers 1 begrenzenden Stoßringfläche ist.

Der Adapterring 27 ist zur Anpassung an den Innenkegel des Aufnahmekörpers 1 mit dem 24° Außenkegel 14 versehen, wobei in der Kegelfläche ebenfalls eine Ringnut 15 zur Aufnahme eines Dicht-O-Ringes 3 vorgesehen ist. Zwischen seiner Kegelfläche 14 und seiner Ringfläche 10 weist der Adapterring 27 in Anpassung an den genormten Aufnahmekörper 1 eine Zylinderaußenfläche 12 und eine radial verlaufende Ringfläche 16 auf.

Die Verbindungssysteme nach den Figuren 3 und 4 gestatten eine Montage des Anschlußzapfens in leicht ausgelenkter Richtung, d.h. in einer Abweichung eines Raumwinkels von ca. 5 Grad zur Achse der Anschlußverschraubung und des Adapters, wodurch eine zuverlässige höchstdruckdichtende Verbindung für nicht fluchtende Rohrleitungen zum Anschlußkörper erreicht wird. Besonders vorteilhaft ist es jedoch, daß nach der Erfindung hierbei genormte 24 Grad Anschlußverschraubungen eingesetzt werden können, die zur Zeit nur für absolut fluchtende Achsen von Verschraubung und Rohr funktionssicher angewendet werden können.

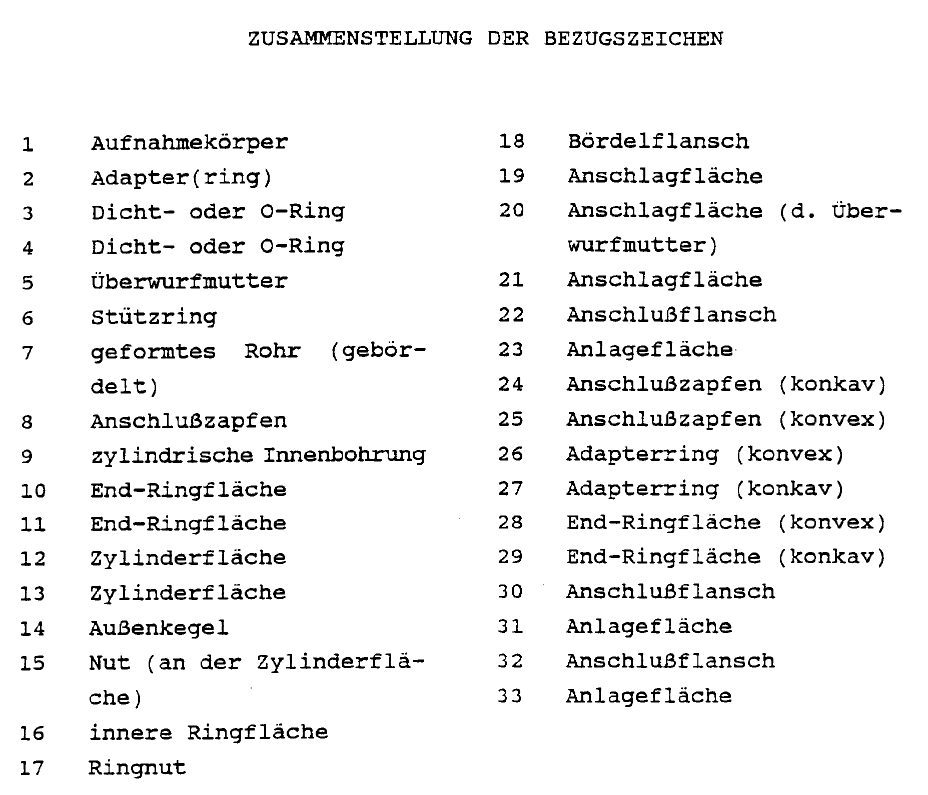

## Patentansprüche

1. Verbindungssystem für höchstdruckfeste Rohrverschraubungen mit einem genormten, einen 24 Grad Anschluß aufweisenden Aufnahmekörper, einer Überwurfmutter zur Herstellung einer druckfesten Verbindung und einem geformten Rohr oder einem Anschlußzapfen zum Verbinden anderer Systemkomponenten, **gekennzeichnet** **durch** einen Adapterring (2) mit zylindrischer Innenbohrung (9) und radial verlaufenden End-Ringflächen (10,11) unterschiedlicher Größe, von denen mindestens eine als Dichtfläche (11) mit Dichtring (4) ausgebildet ist, denen sich jeweils axial gerichtete Zylinderaußenflächen (12, 13) anschließen, zwischen denen sich ein 24° Außenkegel zur Anpassung an den Aufnahmekörper (1) befindet.

2. Verbindungssystem für höchstdruckfeste Rohrverschraubungen mit einem genormten, einen 24 Grad Anschluß aufweisenden Aufnahmekörper, einer Überwurfmutter zur Herstellung einer druckfesten Verbindung und einem geformten Rohr oder einem Anschlußzapfen zum Verbinden anderer Systemkomponenten, **gekennzeichnet durch** einen Adapterring (26, 27) mit zylindrischer Innenbohrung (9) und einer radial verlaufenden End-Ringfläche (10) und einer konvex oder konkav gewölbten sphärischen End-Ringfläche (28, 29), von denen mindestens eine als Dichtfläche mit Dichtring (4) ausgebildet ist, denen sich jeweils axial gerichtete Zylinderaußenflächen (12, 13) anschließen, zwischen denen sich ein 24° Außenkegel zur Anpassung an den Aufnahmekörper (1) befindet.

3. Verbindungssystem nach Anspruch 1 oder 2, **dadurch** **gekennzeichnet, daß** der Außenkegel (14) des Adapterringes (2, 26, 27) eine Ringnut (15) zur Aufnahme eines Dichtringes (3) aufweist.

4. Verbindungssystem nach Anspruch 1, 2 oder 3, **dadurch** **gekennzeichnet, daß** die dem Anschlußzapfen (8, 24, 25) oder dem Bördelflansch (18) des geformten Rohres (7) im montierten Zustand zugekehrte Ringfläche (11, 28, 29) des Adapterringes (2, 26, 27) eine Ringnut (17) zur Aufnahme eines Dicht- oder O-Ringes (4) aufweist.

5. Verbindungssystem nach Anspruch 1 oder einem der voranstehenden Ansprüche, **dadurch** **gekennzeichnet,** **daß** das geformte Rohr (7) einen um etwa 90° zur Rohrachse geformten Bördelflansch (18) aufweist, welcher im montierten Zustand mit der mit dem Dichtelement (4) versehenen Ringfläche (11) des Adapterringes (2) eine Dichtfläche bildet.

6. Verbindungssystem nach Anspruch 1 oder einem der voranste2henden, **dadurch** **gekennzeichnet, daß** im montierten Zustand zwischen der Überwurfmutter (5) und dem geformten Rohr (7) mit Bördelflansch (18) eine Stützhülse (6) angeordnet ist, deren Anschlagfläche (20) zur Überwurfmutter (5) kleiner ist als die äußere Anschlagfläche (19) der Stützhülse (6) zum Bördelflansch (18).

7. Verbindungssystem nach Anspruch 1, 2, 3 oder 4, **dadurch** **gekennzeichnet, daß** die Anschlagfläche (21) der Überwurfmutter (5) mit dem Anschlußzapfen (8,24,25) kleiner ist als die Dichtfläche zwischen dem Anschlußzapfen (8) und dem Adapterring (2,26,27).

## Claims

1. Connecting system for highly pressure-resistant, screwed pipe joints with a standardized receiving body having a 24 degree connection, with a coupling nut for establishing a pressure-resistant connection, and with a moulded pipe or a jointing spigot for connecting other system components, characterised in that it comprises an adapter ring (2) with a cylindrical internal bore (9) and annular end faces (10, 11) of different sizes extending radially, of which at least one is formed as a sealing surface (11) with a sealing ring (4), from which end faces axially arranged external cylinder surfaces (12, 13) lead to a 24° outer cone situated between them for fitting to the receiving body (1).

2. Connecting system for highly pressure-resistant, screwed pipe joints with a standardized receiving body having a 24 degree connection, with a coupling nut for establishing a pressure-resistant connection, and with a moulded pipe or a jointing spigot for connecting other system components, characterised in that it comprises an adapter ring (26, 27) with a cylindrical internal bore (9), an annular end face (10) extending radially, and a convexly or concavely curved, spherical annular end face (28, 29), of which at least one is formed as a sealing surface with a sealing ring (4), from which end faces axially arranged external cylinder surfaces (12, 13) lead to a 24° outer cone situated between them for fitting to the receiving body (1).

3. Connecting system according to Claim 1 or 2, characterised in that the outer cone (14) of the adapter ring (2, 26, 27) has an annular slot (15) for receiving a sealing ring (3).

4. Connecting system according to Claim 1, 2 or 3, characterised in that the annular face (11, 28, 29) of the adapter ring (2, 26, 27), which is directed towards the jointing spigot (8, 24, 25) or towards the flange (18) of the moulded pipe (7) when the system is assembled, has an annular slot (17) for receiving a sealing ring or O-ring (4).

5. Connecting system according to Claim 1 or one of the above Claims, characterised in that the moulded pipe (7) has a flange (18) set at approximately 90° to the axis of the pipe, which flange, when the system is assembled, forms a sealing surface with the annular face (11) of the adapter ring (2) that is provided with the sealing element (4).

6. Connecting system according to Claim 1 or one of the above Claims, characterised in that when the system is assembled a bushing (6) is disposed between the coupling nut (5) and the moulded pipe (7) with flange (18), the stop face (20) of which for the coupling nut (5) is smaller than the external stop face (19) of the bushing (6) for the flange (18).

7. Connecting system according to Claim 1, 2, 3 or 4, characterised in that the stop face (21) of the coupling nut (5) for the jointing spigot (8, 24, 25) is smaller than the sealing surface between the jointing spigot (8) and the adapter ring (2, 26, 27).

## Revendications

1. Système d'assemblage pour filets tubulaires résistant aux très hautes pressions, avec un corps de réception normalisé présentant un raccord à 24 degrés, un écrou d'accouplement servant à réaliser une liaison résistant à la pression, et un tube mis en forme ou un mamelon d'assemblage pour assembler d'autres composants du système, caractérisé par une bague d'adaptation (2) à alésage intérieur cylindrique (9) et surfaces d'extrémité annulaires (10, 11) s'étendant radialement et de tailles différentes, dont au moins une est configurée en forme de surface d'étanchéité (11) avec bague d'étanchéité (4), et à chacune desquelles se raccordent des surfaces extérieures cylindriques (12, 13) orientées axialement, entre lesquelles se trouve un cône extérieur de 24° d'adaptation au corps de réception (1).

2. Système d'assemblage pour filets tubulaires résistant aux très hautes pressions, avec un corps de réception normalisé présentant un raccord à 24 degrés, un écrou d'accouplement servant à réaliser une liaison résistant à la pression, et un tube mis en forme ou un mamelon d'assemblage pour assembler d'autres composants du système, caractérisé par une bague d'adaptation (26, 27) à alésage intérieur cylindrique (9) et surface d'extrémité annulaire (10) s'étendant radialement, et surface d'extrémité annulaire (28, 29) sphérique à courbure convexe ou concave, dont au moins une est configurée en forme de surface d'étanchéité à bague d'étanchéité (4), à chacune desquelles se raccordent des surfaces extérieures cylindriques (12, 13) orientées axialement, entre lesquelles se trouve un cône extérieur de 24° d'adaptation au corps de réception (1).

3. Système d'assemblage selon la revendication 1 ou 2, caractérisé en ce que le cône extérieur (14) de la bague d'adaptation (2, 26, 27) présente une gorge annulaire (15) de réception d'une bague d'étanchéité (3).

4. Système d'assemblage selon la revendication 1, 2 ou 3, caractérisé en ce que la surface annulaire (11, 28, 29) de la bague d'adaptation (2, 26, 27), tournée en position montée vers le mamelon d'assemblage (8, 24, 25) ou la bride périphérique (18) du tube mis en forme (7), présente une gorge annulaire (17) de réception d'une bague d'étanchéité ou d'un joint torique (4).

5. Système d'assemblage selon la revendication 1 ou l'une des revendications précédentes, caractérisé en ce que le tube mis en forme (7) présente une bride périphérique (18) formée sensiblement à 90° par rapport à l'axe du tube, qui en position montée forme une surface d'étanchéité avec la surface annulaire (11) de la bague d'adaptation (2) dotée de l'élément d'étanchéité (4).

6. Système d'assemblage selon la revendication 1 ou l'une des revendications précédentes, caractérisé en ce qu'en position montée, entre l'écrou d'accouplement (5) et le tube mis en forme (7) à bride périphérique (18), est disposé un manchon d'appui (6) dont la surface de butée (20) sur l'écrou d'accouplement (5) est plus petite que la surface extérieure de butée (19) du manchon d'appui (6) sur la bride périphérique (18).

7. Système d'assemblage selon la revendication 1, 2, 3 ou 4, caractérisé en ce que la surface de butée (21) de l'écrou d'accouplement (5) avec le mamelon d'assemblage (8, 24, 25) est plus petite que la surface d'étanchéité entre le mamelon d'assemblage (8) et la bague d'adaptation (2, 26, 27).
